# DEMANDE DE BREVET EUROPEEN

(11) **EP 0 990 963 A1**
(43) Date de publication de la demande: **05.04.2000**
(21) Numéro de dépôt: 99118593.5
(22) Date de dépôt: 21.09.1999
(51) Int. Cl.: G04G 1/00, G01C 21/20

(54) **Montre comportant un guide touristique électronique**

(30) Priorité: 28.09.1998 EP 98118292
(71) Demandeur: The Swatch Group Management Services AG, 2501 Biel (CH)
(72) Inventeur: Hayek, Georges Nicolas, 8032 Zürich (CH); Müller, Jacques, 2732 Reconvilier (CH)
(74) Mandataire: Thérond, Gérard Raymond

(57) **Abrégé**

Cette montre peut guider son porteur vers un lieu défini par le porteur, et comprend des moyens d'affichage de l'heure (2, 3, 11), des moyens de sélection (9), des moyens de traitement de données (8), et des moyens de détermination de la direction dudit lieu constitués d'une antenne (5) et d'un récepteur GPS (6) pour déterminer les coordonnées géographiques de l'endroit où se trouve ladite montre. Selon l'invention cette montre comporte en outre un guide touristique électronique comprenant une unité de stockage reprogrammable (14) agencée pour recevoir une base de données relatives aux informations touristiques locales, lesdits moyens de sélection (9) étant agencés de sorte que le porteur peut sélectionner dans ladite base de données ledit lieu, et que lesdits moyens de détermination de direction peuvent déterminer ladite direction dudit lieu et peuvent ensuite indiquer, par l'intermédiaire desdits moyens d'affichage (2, 3, 11), cette direction.

## Description

La présente invention concerne un guide touristique électronique comportant un récepteur GPS (Global Positioning System) destiné à guider son porteur vers un lieu ou un établissement sélectionné par celui-ci.

Un touriste arrivant dans une ville inconnue est souvent limité dans sa liberté faute d'un guide touristique adéquat. En effet, il peut consulter l'office du tourisme local qui peut fournir des informations relatives à la ville, telle qu'une liste des musées, des restaurants, un plan approximatif de ville etc., mais qui ne peut évidement pas escorter le touriste jusqu'aux endroits retenus. De plus, la disponibilité des employés d'un office du tourisme n'est pas toujours optimale, surtout en haute saison de tourisme, et les renseignements fournis ne sont pas exhaustifs, notamment en ce qui concerne les établissements qui ne sont pas typiquement touristiques (magasins, restaurants etc.).

Par ailleurs, on connaît des dispositifs d'aide à la conduite tels que les systèmes de navigation comprenant un récepteur GPS combiné avec un lecteur CD-ROM ou lecteur de cartes électroniques, etc. Un CD-ROM contenant une carte du pays et/ou des plans de villes peut être inséré selon le besoin, et on peut programmer une ville ou une rue comme destination. Le récepteur GPS reçoit un signal à haute fréquence provenant de plusieurs satellites et contenant des données de positionnement, par l'intermédiaire d'une antenne à laquelle le récepteur est connecté. La position de la voiture peut donc être détectée au moyen des signaux GPS, si bien qu'il est possible d'afficher la direction à suivre pour arriver à destination.

Pour pallier partiellement à cette dernière limitation, il a été proposé dans le document FR-A-2 730 083 un procédé mobile d'information touristique. Ce procédé prévoit l'utilisation d'un récepteur GPS en combinaison avec un lecteur de disques compacts (CD). Le lecteur CD peut être intégré dans un dispositif autoradio. Ce procédé présume en outre l'existence des disques compacts contenant des données locales touristiques. Ainsi, l'utilisateur peut insérer un disque compact approprié et indiquer un périmètre circulaire dont l'éloignement du centre est déterminé par l'utilisateur. Une unité de traitement détecte, grâce aux signaux GPS, la position de l'utilisateur et affiche des lieux à proximité desquels il passe dans ce périmètre. Ce procédé incite donc l'utilisateur à visiter une destination qu'il n'aurait pas a priori envisagée.

Toutefois, ce procédé ne prévoit pas la possibilité de choisir une destination précise préalablement. Il n'est donc pas possible de choisir un musée par exemple pour faire afficher la direction vers ce musée. De plus, les dispositifs susmentionnés nécessitent un lecteur CD comme support de données les rendant ainsi encombrants et coûteux. De plus, le système de traitement de ces données doit être performant et donc gourmand en consommation électrique.

Le but de la présente invention est de remédier aux inconvénients susmentionnés en fournissant un guide touristique électronique compact et flexible qui est intégré dans une montre comportant un récepteur GPS et des moyens permettant à l'utilisateur de choisir ses propres destinations parmi une pluralité de destinations proposées, celle montre ayant en outre des moyens pour indiquer une direction.

Un autre but de la présente invention est de fournir une telle montre à faible consommation et relativement peu coûteuse.

Ces buts ainsi que d'autres sont atteints grâce aux caractéristiques que présente la montre selon la revendication 1.

On va décrire ci-après, à titre d'exemple uniquement, un mode de réalisation de l'objet de l'invention en se référant aux dessins annexés, dans lesquels :
- la figure 1 est une vue en plan d'un mode de réalisation préféré d'une montre selon la présente invention,
- la figure 2 représente un schéma fonctionnel sous forme de blocs de la structure interne de la montre selon la présente invention,
- la figure 3 est une représentation agrandie de la cellule d'affichage numérique de la montre de la figure 1,
- les figures 4a à 4d représentent les différentes étapes à suivre sur l'affichage de la figure 3 pour faire une sélection d'un lieu touristique, et
- la figure 5 représente la montre de la figure 1 dans sa fonction de guide touristique.

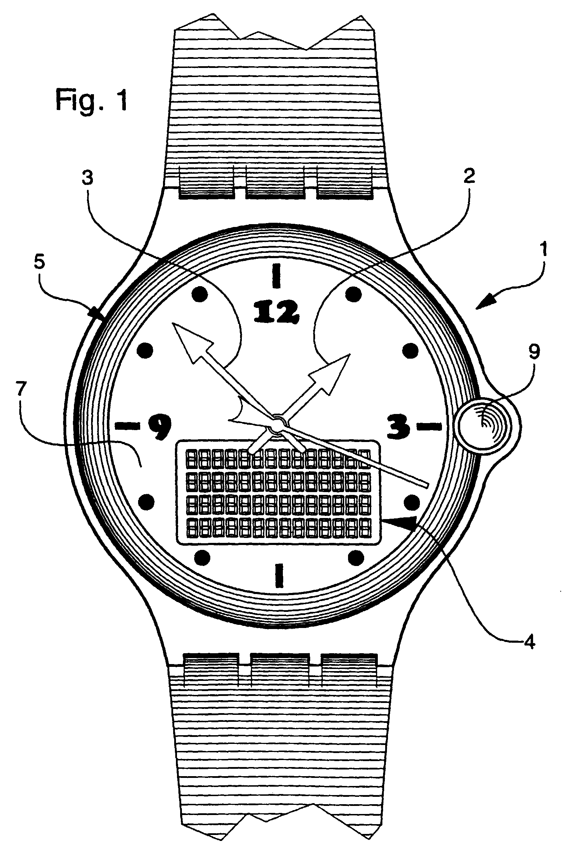

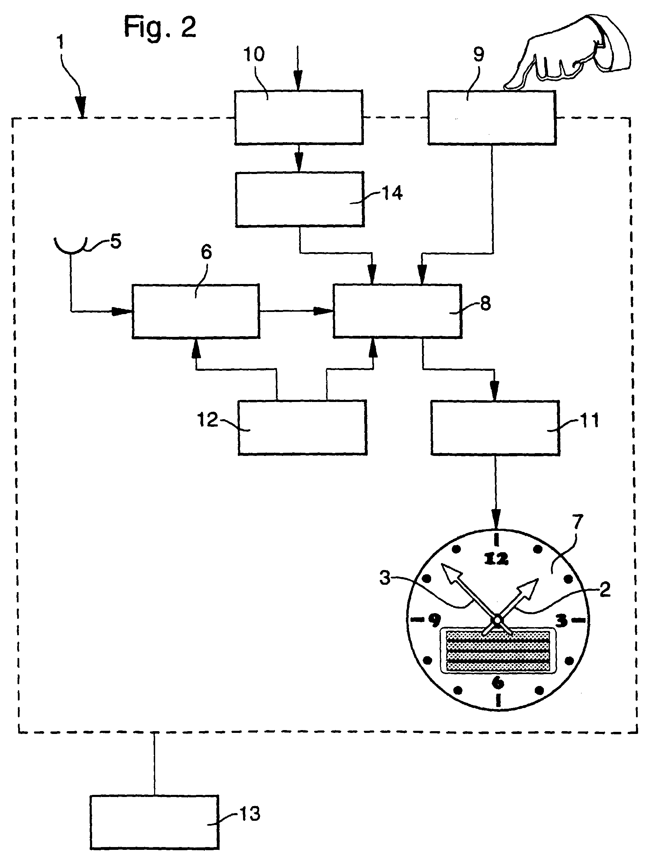

La figure 1 représente un mode de réalisation préféré d'une montre multifonction comportant un guide touristique électronique selon l'invention. La montre multifonction 1 comporte un garde-temps qui affiche l'heure du jour au moyen des moyens d'affichage de l'heure, ici des aiguilles d'heures 2 et de minutes 3, un cadran 7 ainsi qu'une cellule d'affichage 4 formée par exemple d'un cristal liquide pouvant afficher le quantième ou autre information selon la fonction sélectionnée. La montre 1 comporte en outre des moyens de détermination de direction formés par une antenne 5 associée à un récepteur GPS 6 (voir figure 2). L'antenne 5 est agencée de façon à pouvoir recevoir des signaux émis par un ou plusieurs satellites, et peut constituer avantageusement une partie ou la totalité du cadran 7.

En se référant à la figure 2, la sortie du récepteur GPS 6 est connectée à une première entrée des moyens de traitement des données 8, typiquement un microprocesseur. Les moyens de traitement 8 comprennent une deuxième entrée associée à une unité de stockage reprogrammable 14 dont l'entrée est connectée à la sortie des moyens d'introduction de données 10, une troisième entrée connectée à la sortie des moyens de sélection 9 propres à être actionnés par l'utilisateur de la montre 1, et une sortie connectée à une entrée d'un moteur 11 relié aux aiguilles 2 et 3, et agencé de façon à entraîner ces dernières. Une quatrième entrée des moyens de traitement 8 est reliée au garde-temps ou horloge interne 12, typiquement une base de temps associée à un quartz. Bien entendu, la montre comporte encore une source d'alimentation 13 telle qu'une pile ou une microgénératrice associée à une masse oscillante.

Les moyens de sélection 9 peuvent être constitués d'un bouton-poussoir classique agencé pour pouvoir sélectionner différentes fonctions et effectuer la mise à l'heure de la montre 1. Par exemple, ces moyens de sélection 9 sont réalisés sous forme d'un dispositif de commande à bille tel que décrit dans le document EP-A-0 582 150. Les moyens d'introduction de données 10 servent à fournir aux moyens de traitement de données 8, par l'intermédiaire de l'unité de stockage reprogrammable 14, les informations nécessaires pour le guide touristique électronique.

L'unité de stockage reprogrammable 14 peut être constituée d'une mémoire volatile (par exemple une RAM) ou d'une mémoire non volatile reprogrammable (par exemple une EEPROM) et elle est agencée pour recevoir un logiciel à travers les moyens d'introduction de données 10. Le logiciel contient une base de données relatives aux informations touristiques locales et/ou régionales ainsi qu'un programme d'application particulier dédié au traitement de ces données touristiques locales et/ou régionales. L'unité de stockage reprogrammable 14 contient de préférence un programme d'opération par menu permettant au porteur de la montre 1 de choisir, grâce aux moyens de sélection 9, un endroit touristique précis dans la base de données touristiques, comme cela sera expliqué en détail ci-après.

Bien entendu, il est également possible que le programme d'application et/ou le programme d'opération par menu soient déjà présents dans la montre, par exemple dans une mémoire non volatile pré-programmée à cet effet. Ainsi, seule la base de données doit être chargée pour une localité ou région déterminée.

L'homme du métier sait comment charger le logiciel d'une façon adéquate dans la montre. Une manière de charger un logiciel est décrite par exemple dans le document US-A-4 853 682. Ce document décrit une montre ayant un émetteur-récepteur pouvant transmettre des données entre une montre et un ordinateur. La montre et l'ordinateur contiennent chacun une bobine associée à un circuit électronique de transmission permettant la communication entre les deux unités. La bobine fonctionne donc en tant que moyen d'introduction de données. D'autres transmissions de données sans contact peuvent également être envisagées, notamment par des signaux lumineux ou ultra-sonores.

Dans un mode particulièrement avantageux, la montre 1 comprend une source d'alimentation 13 rechargeable. Pour charger la source 13, la montre doit être posée généralement dans un dispositif chargeur (non représenté). Comme le dispositif chargeur contient classiquement une bobine pour transmettre l'énergie électromagnétiquement vers la source d'alimentation 13 de la montre 1, il est également possible de transmettre des données au même moment, par exemple en modulant le champ électromagnétique de charge. La transmission du logiciel a dans ce cas lieu à travers le dispositif chargeur de cette source. Un exemple montrant plus en détail cette façon de transmettre des données d'un dispositif externe vers la montre est donné dans le document NL-A-90 00685 qui décrit un dispositif portable et rechargeable pouvant recevoir de l'information pendant la charge inductive quand ce dispositif est posé dans son chargeur.

Comme la base de données du logiciel chargé ne contient que les données touristiques d'une ville ou d'une région précise, le temps de chargement est limité et on peut éviter de charger, et donc stocker, trop d'informations. Ainsi, toutes les informations peuvent être stockées dans l'unité de stockage reprogrammable 14 et il n'y a pas besoin de prévoir un lecteur CD ou autres appareils externes de stockage de données qui sont encombrants et gourmands en énergie.

A cet effet, quand le porteur de la montre 1 selon l'invention arrive dans une ville ou une région qu'il aimerait visiter, le logiciel avec au moins une base de données touristiques de cette ville ou région est chargé dans la montre, de préférence par des moyens d'introduction de données sans contact. Ceci peut être effectué à l'office du tourisme local, mais aussi à un endroit spécialement adapté tel qu'une boutique ou un kiosque. Il est même envisageable de prévoir des appareils électroniques de style guichet automatique, similaires à ceux connus sous le nom 〈〈 Bancomat® 〉〉 permettant de charger automatiquement la montre 1.

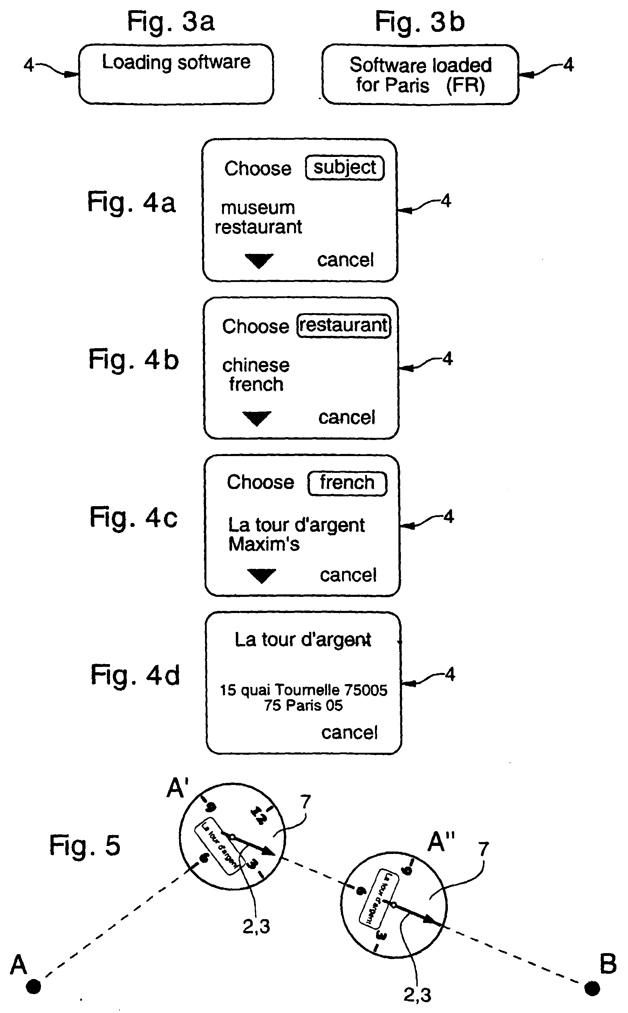

Pour faciliter l'utilisation, l'affichage numérique 4 de la montre 1 peut indiquer par exemple l'état et le mode de fonctionnement de celle-ci. En manipulant les moyens de sélection 9, il est possible de choisir le mode 〈〈 charger 〉〉 pour que le logiciel contenant la base de données touristiques locales puisse être chargé dans la montre 1. La figure 3a montre un exemple de l'indication sur l'affichage 4 quand la montre est en train d'être chargé (〈〈 loading software 〉〉). La figure 3b montre la fin de chargement et l'affichage 4 indique donc que le logiciel contenant les données touristiques a été chargé. Dans l'exemple qui sera décrit par la suite, le touriste se trouve à Paris, France.

Une fois le logiciel chargé, le porteur de la montre 1 selon l'invention peut utiliser le programme d'opération par menu pour faire sa sélection. Les figures 4a à 4d montrent un exemple de menu ayant une structure en arborescence.

A la figure 4a, on voit un premier menu donnant plusieurs sujets au choix : des musées (〈〈 muséum 〉〉), des restaurants (〈〈 restaurant 〉〉), des cabarets etc.. Bien entendu, le nom du sujet et le nombre de sujets ne dépendent que du logiciel chargé. L'interface de présentation de ces menus peut être réalisée d'une manière connue par exemple des téléphones mobiles cellulaires GSM (Global System for Mobile communication). Ainsi, les moyens de sélection 9 peuvent être manipulés pour faire défiler toute la liste de sujets. Quand un sujet convient au porteur de la montre 1, il peut confirmer son choix en pressant sur ces moyens de sélection 9. Une fois le choix effectué, par exemple 〈〈 restaurant 〉〉, celui-ci est indiqué, voir figure 4b, et un sous-menu est présenté. Ce sous-menu peut comprendre notamment une liste de différentes catégories de restaurants, par exemple chinois (〈〈 chinese 〉〉), français (〈〈 french 〉〉) etc.. Ensuite, le porteur choisit la catégorie, dans cet exemple une cuisine française, et une liste de restaurants proposant une cuisine française est affichée, voir la figure 4c. Le porteur choisit alors un restaurant qui lui convient, voir la figure 4d. Si le porteur de la montre 1 s'est trompé, il peut toujours retourner vers le (sous-) menu précédent, en choisissant par exemple l'option annuler (〈〈 cancel 〉〉).

Quand le choix est confirmé, par exemple en pressant à nouveau sur les moyens de sélection 9, le nom du restaurant est affiché et les moyens de traitement des données 8 cherchent dans un tableau pré-programmé de la base de données chargée les coordonnées géographiques, c'est-à-dire la longitude, la latitude et éventuellement l'altitude, correspondant au restaurant sélectionné par l'utilisateur.

Le fonctionnement du guide touristique électronique incorporé dans la montre 1 pour diriger son utilisateur est décrit ci-après à l'aide de la figure 5.

Le porteur se trouve initialement à un point A, par exemple l'office du tourisme ayant les coordonnées géographiques (A1, A2, A3), et souhaite donc atteindre le sujet situé au point B lequel a les coordonnées géographiques (B1, B2, B3). Ensuite, le porteur sélectionne et enclenche le mode de fonctionnement 〈〈 direction 〉〉 par les moyens de sélection 9 servant également de moyens de commande. Le porteur doit attendre d'être localisé par le nombre de satellites nécessaires, généralement au moins trois satellites, par l'intermédiaire du récepteur GPS 6 pour obtenir les coordonnées (A1, A2, A3). Avantageusement, le récepteur GPS 6 stocke les codes d'accès auxdits satellites pour lui permettre de recevoir ultérieurement des informations, sans avoir besoin d'attendre à nouveau d'être localisé. Plus précisément, le récepteur GPS 6 reçoit les coordonnées géographiques et le temps d'au moins trois satellites et, par un algorithme de calculs connu par exemple du document 〈〈 Radionavigation Systems 〉〉 de Börje Forssell, il en déduit la position du porteur de la montre 1 représentée par le triplet de coordonnées géographiques (A1, A2, A3). Toutefois, l'orientation de la montre 1 n'est pas connue. Ainsi, le porteur commence à marcher dans une direction quelconque, vers un point A' par exemple, pour que le triplet de coordonnées géographiques (A'1, A'2, A'3) de ce point A' puisse être déterminé par le récepteur GPS 6. Ainsi, une direction de référence peut être déterminée, laquelle est alignée sur un axe de référence de la montre. Cet axe de référence peut être défini de la manière décrite dans la demande de brevet européen EP 0 871 096 qui est incorporée ici par référence. De plus, cette demande de brevet montre la possibilité d'utiliser les aiguilles de la montre comme indicateurs de sens de marche et/ou de la direction à suivre pour atteindre la destination choisie. Dans l'exemple décrit, l'ensemble constitué des aiguilles 2 et 3 peut être déplacé sous l'action combinée des moyens de traitement des données et d'un moteur commandé par ceux-ci, voir par exemple la demande de brevet européen EP 0 721 155.

Bien entendu, il est possible de prévoir, dans un autre mode de réalisation, une boussole dans la montre 1 pour obtenir une référence vers le nord magnétique afin d'établir directement l'orientation. Toutefois, ceci augmente l'encombrement de la montre.

Selon la demande de brevet européen EP 0 871 096 précitée, l'axe 6h-12h du cadran 7 de la montre 1 peut être utilisé en tant qu'axe de référence. Le porteur de la montre aligne cet axe avec la direction dans laquelle il marche, c'est-a-dire la direction entre les points A et A', pour déterminer une orientation de référence.

Dans l'exemple décrit dans cette demande de brevet, après la détermination de la direction selon cet axe de référence, les aiguilles vont alors être déplacées sous l'action combinée des moyens de traitement 8 et du moteur 11 pour indiquer la direction dans laquelle le porteur de la montre selon l'invention doit marcher relativement à l'axe de référence pour atteindre la destination, c'est-à-dire la direction entre le point A' et le point B. Ainsi, si le porteur utilise toujours l'axe 6h-12h du cadran en tant qu'axe de référence, et aligne ce dernier avec la direction dans laquelle il marche, il se dirige vers la destination, c'est-à-dire le restaurant retenu, quand l'ensemble constitué des aiguilles 2 et 3 est aligné avec cet axe 6h-12h, comme cela est représenté en figure 5 au point A''.

Bien entendu, il est également possible de prévoir d'autres repères et/ou axes de références. Par exemple, un alignement circulaire des diodes autour de la lunette ou le cadran qui s'allument pour indiquer la direction.

Selon le système de positionnement sans boussole, le porteur doit marcher sur une certaine distance qui dépend de la résolution du système de positionnement. A titre d'exemple, pour le GPS standardisé, cette distance est au minimum autour de 30 mètres, tandis que pour le système dGPS (pour differential GPS), cette distance peut être ramenée à quelques mètres. Bien entendu, quand la montre comporte une boussole, la direction de marche n'est pas importante, parce que la direction à suivre peut être indiquée en tout temps par rapport au nord magnétique dont la direction est déterminée en continu ou à une fréquence donnée.

Ainsi, le porteur de la montre peut se retrouver facilement dans une ville inconnue, et est libre de se déplacer où et quand il veut grâce à la montre incorporant un guide touristique électronique selon l'invention. De plus, ce guide touristique électronique n'occupe que peu de place et est relativement peu gourmand en énergie.

Il est à noter que plusieurs modifications et/ou améliorations peuvent être apportées à la montre selon l'invention sans sortir du cadre de celle-ci.

Par exemple, on peut modifier la montre selon la présente invention de sorte qu'une des deux aiguilles indique la direction de la destination retenue, tandis que l'autre aiguille indique par exemple la direction du nord géographique, ou l'heure. Un affichage digital peut aussi être prévu à la place d'un affichage analogique pour indiquer la direction à suivre.

Finalement, dans une variante préférée, il est prévu d'indiquer la distance à parcourir et/ou la distance restante jusqu'à la destination sélectionnée pour que l'utilisateur puisse décider si la distance à parcourir ou restante jusqu'à cette destination lui conviennent.

## Revendications

1. Montre multifonction (1) destinée à guider son porteur vers un lieu ou un établissement défini par le porteur, et comprenant une horloge interne (12), des moyens d'affichage notamment de l'heure (2, 3, 11), des moyens de sélection (9) pour sélectionner des fonctions, des moyens de traitement de données (8), une source d'alimentation (13), des moyens d'introduction de données (10), et des moyens de détermination de la direction dudit lieu ou établissement qui sont associés auxdits moyens de traitement (8) et étant constitués d'une antenne (5) et d'un récepteur GPS (6) pour déterminer les coordonnées géographiques de l'endroit où se trouve ladite montre, cette montre comportant en outre un guide touristique électronique comprenant une unité de stockage reprogrammable (14) agencée pour recevoir, par l'intermédiaire desdits moyens d'introduction de données (10), un logiciel contenant au moins une base de données relatives aux informations touristiques locales ou régionales, lesdits moyens de sélection (9) étant agencés de sorte que le porteur peut sélectionner dans ladite base de données ledit lieu ou établissement, ladite unité de stockage reprogrammable (14) étant associée auxdits moyens de traitement (8) pour leur fournir les coordonnées géographiques dudit lieu ou établissement de sorte que lesdits moyens de détermination de direction peuvent déterminer ladite direction dudit lieu ou établissement et peuvent ensuite indiquer, par l'intermédiaire desdits moyens d'affichage (2, 3, 11), cette direction.

2. Montre selon la revendication 1, caractérisée en ce que lesdits moyens d'introduction de données (10) forment une unité sans contact externe, notamment un récepteur de signaux électromagnétiques.

3. Montre selon la revendication 1 ou 2, dans laquelle lesdits moyens d'affichage comportent un affichage numérique (4) agencé pour afficher lesdites données relatives aux informations touristiques.

4. Montre selon l'une quelconque des revendications précédentes, dans laquelle ledit logiciel comporte en outre un programme d'application dédié au traitement desdites données.

5. Montre selon l'une quelconque des revendications précédentes, dans laquelle ladite source d'alimentation (13) est une source rechargeable, et dans laquelle ledit logiciel est chargé dans ladite unité de stockage reprogrammable (14) simultanément à la recharge de ladite source.

6. Montre selon l'une quelconque des revendications précédentes, comprenant des aiguilles (2, 3) pour l'affichage de données horaires, une desdites aiguilles étant utilisée pour indiquer la direction dudit lieu ou établissement.

7. Montre selon l'une quelconque des revendications précédentes, comportant on outre une boussole pour déterminer la direction du nord géographique.

8. Montre selon l'une des revendications précédentes, caractérisée en ce qu'elle comprend des moyens pour indiquer la distance séparant le porteur de celle montre et une destination sélectionnée.
